# EUROPÄISCHE PATENTSCHRIFT

(11) **EP 1 869 290 B1**
(45) Veröffentlichungstag und Bekanntmachung des Hinweises auf die Patenterteilung: **29.12.2010**
(21) Anmeldenummer: 06725105.8
(22) Anmeldetag: 16.03.2006
(51) Int. Cl.: F01D 5/18, F23R 3/04

(54) **BAUTEIL MIT FILMKÜHLLOCH**
COMPONENT WITH FILM COOLING HOLES
COMPOSANT A TROU DE REFROIDISSEMENT PAR FILM FLUIDE

(30) Priorität: 12.04.2005 EP 05007993
(43) Veröffentlichungstag der Anmeldung: 26.12.2007
(60) Teilanmeldung: 10006981.4
(73) Patentinhaber: SIEMENS AKTIENGESELLSCHAFT, 80333 München (DE)
(72) Erfinder: BECK, Thomas, 16341 Panketal (DE); SETTEGAST, Silke, 10439 Berlin (DE)
(86) Internationale Anmeldenummer: PCT/EP2006/060794
(87) Internationale Veröffentlichungsnummer: WO 2006/108749

(56) Entgegenhaltungen:
- EP-A- 0 950 463
- EP-A- 1 043 480
- US-A- 4 818 834

## Beschreibung

Die Erfindung betrifft ein Bauteil mit einem Filmkühlloch gemäß dem Oberbegriff des Anspruchs 1.

Bauteile für Anwendungen bei hohen Temperaturen bestehen aus einer Superlegierung mit zusätzlichem Schutz gegen Oxidation, Korrosion und hohe Temperaturen. Hierzu weist das Substrat des Bauteils eine Korrosionsschutzschicht auf, auf der beispielsweise noch eine äußere keramische Wärmedämmschicht aufgebracht ist.
Zur zusätzlichen Kühlung werden noch Durchgangslöcher in das Substrat und die Schichten eingebracht, aus denen an der äußeren Oberfläche ein Kühlmedium austritt und zur Filmkühlung beiträgt. Dabei ist das Filmkühlloch in der Nähe der äußeren Oberfläche zu einem so genannten Diffusor verbreitert. Bei der Neuherstellung eines Bauteils mit einem Filmkühlloch ergeben sich Probleme, da der Diffusor sowohl durch die Schichten als auch größtenteils in das Substrat eingebracht wird. Beim Refurbishment, dem Wiederaufarbeiten von Bauteilen besteht das Problem darin, dass das Durchgangsloch schon vorhanden ist und das Substrat wieder beschichtet werden muss, so dass danach auch aus dem Diffusorbereich im Durchgangsloch Beschichtungsmaterial entfernt werden muss.

Die US-PS 4,743,462 offenbart eine Methode zum Verschließen eines Filmkühllochs, bei dem ein Stopfen, bestehend aus einem Stift und einem kugelförmigen Kopf in das Filmkühlloch gesteckt wird. Dabei wird eine glockenförmige Vertiefung innerhalb der Beschichtung erreicht. Die Vertiefung dient jedoch nicht als Diffusor, da sie symmetrisch ausgebildet ist. Außerdem besteht die Wirkungsweise des Kopfs darin, dass das Material des Kopfs während der Beschichtung verdampft. Somit lassen sich genaue, reproduzierbare Vertiefungen für eine Vielzahl von Filmkühllöchern nicht herstellen.

Die EP 1 043 480 A1 offenbart ein Bauteil mit mindestens einem Filmkühlloch, wobei das Bauteil aus einem Substrat und zumindest einer Schicht besteht. In der EP 1 043 480 A1 wird in der Beschreibung im Abschnitt 0034 ausgeführt, dass die Seitenwand des Filmkühllochs mit konstantem Querschnitt in Ausströmrichtung geneigt sein kann und somit der Lochausgang einen Diffusor bildet.

Eine ähnliche symmetrische Verbreiterung eines Filmkühllochs ist in der Figur 3 der US 6573,474 offenbart.

Die EP 1 350 860 A1 offenbart ein Verfahren zum Maskieren eines Filmkühllochs. Das Material des Maskiermittels ist so gewählt, dass sich dort kein Beschichtungsmaterial während einer nachfolgenden Beschichtung abscheidet. Dabei ist keine genaue, reproduzierbare Form von Vertiefungen innerhalb einer Schicht erzeugbar. Außerdem ist hier kein Diffusor beschrieben.

Die EP 1 091 090 A2 offenbart ein Filmkühlloch, bei dem eine Nut in die Schicht eingebracht wird, so dass die Nut längs mehrerer Filmkühllöcher verläuft. Weder die Filmkühllöcher noch die Nut weisen einen Diffusorbereich auf.

Die US-PS 5,941,686 offenbart ein Schichtsystem, bei dem das Substrat bearbeitet wird. Ein Diffusorbereich wird nicht offenbart.

Die EP 1 076 107 A1 offenbart ein Verfahren zum Maskieren von Filmkühllöchern, bei dem jeweils ein Stopfen in dem Filmkühlloch erzeugt wird, der aus dem Loch herausragt. Dafür wird in einem ersten Schritt Luft durch das Filmkühlloch geblasen und eine Beschichtung aufgebracht, wobei dann ein Precursor für den herzustellenden Stopfen in das Filmkühlloch und in die Beschichtung eingebracht wird. Der Teil des Stopfens, der innerhalb der provisorischen Schicht angeordnet ist, wird in seiner Form dadurch bestimmt, wie stark ein Medium durch das Filmkühlloch geblasen wird und wie die Beschichtung der provisorischen Schicht erfolgt. Somit ist die Form des Teils des Stopfens, der aus dem Loch herausragt, nicht reproduzierbar.

Es ist daher Aufgabe der Erfindung dieses Problem zu überwinden.

Die Aufgabe wird gelöst durch ein Bauteil gemäß Anspruch 1.

In den Unteransprüchen sind weitere vorteilhafte Maßnahmen aufgelistet, die beliebig in vorteilhafter Art und Weise miteinander verbunden werden können.

Es zeigen
- Figuren 1 bis 6: Ausführungsbeispiele eines erfindungsge- mäßen Bauteils mit einem Filmkühlloch,
- Figur 7, 8: zeigt eine Aufsicht auf ein erfindungsge- mäßes Filmkühlloch,
- Figur 9 bis 13: Ausgestaltungen eines Filmkühllochs,

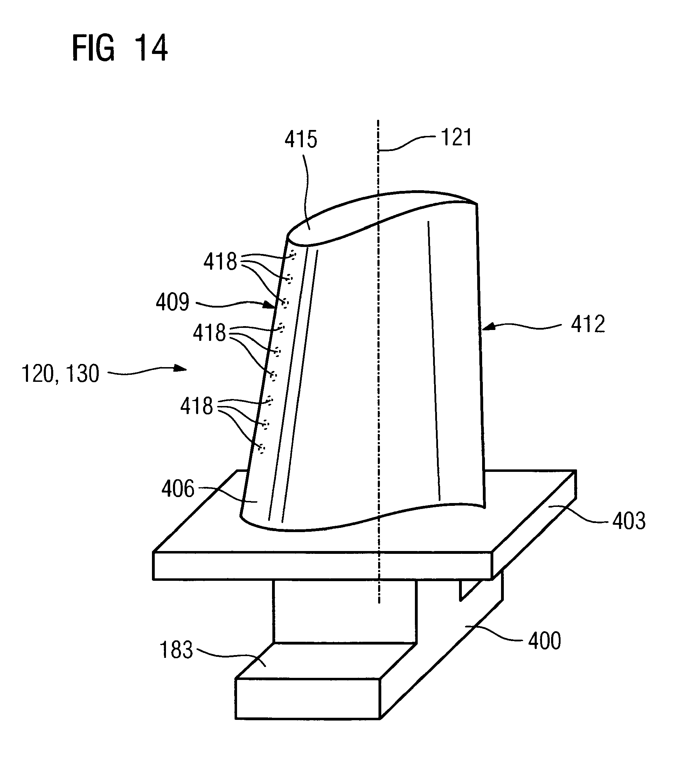

- Figur 14: veranschaulicht den Nachteil des Stands der Technik,
- Figur 15: eine Turbinenschaufel,
- Figur 16: eine Brennkammer,
- Figur 17: eine Gasturbine.

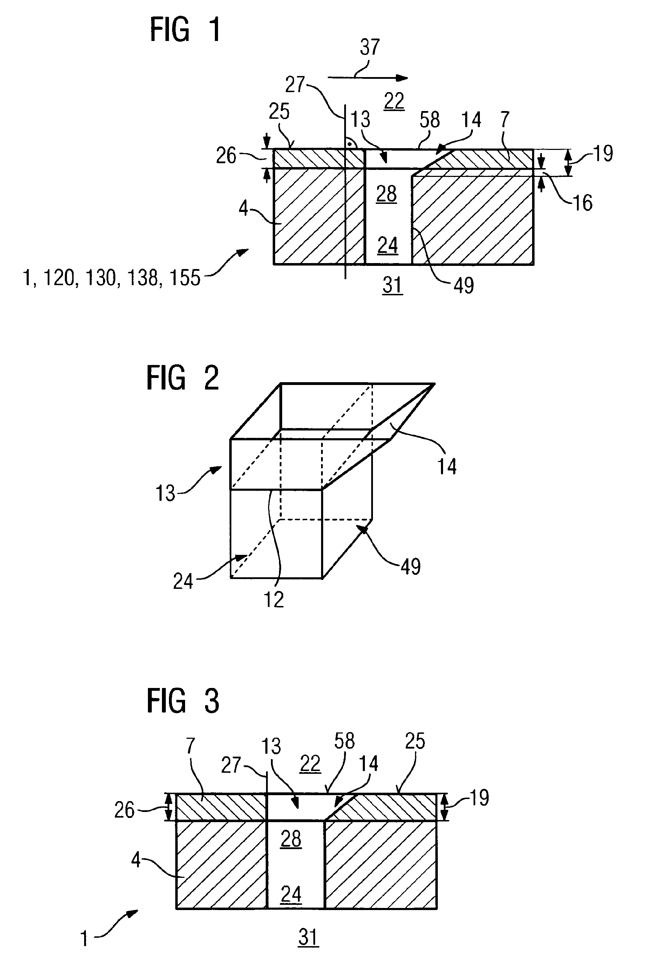

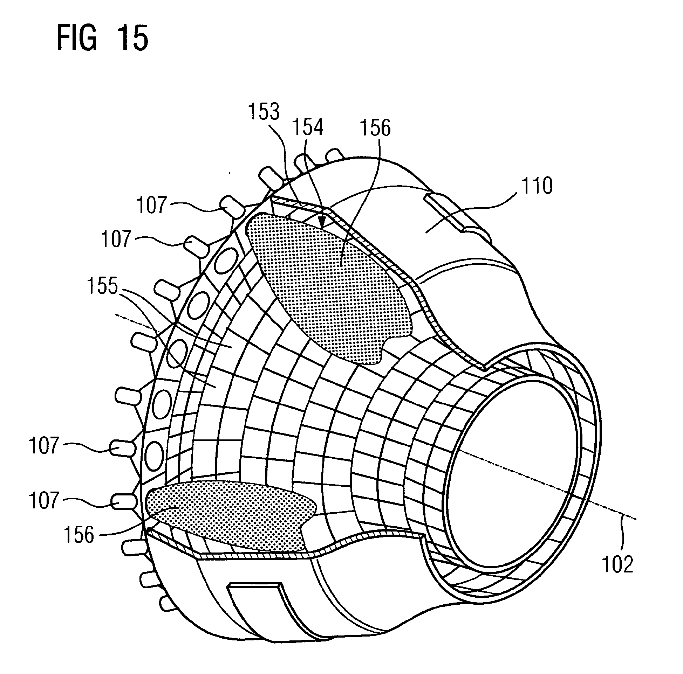

Figur 1 zeigt ein Bauteil 1, 120, 130, 138, 155 bestehend aus einem Substrat 4 und einer einzigen äußeren Schicht 7.
Das Substrat 4 ist insbesondere bei Bauteilen 120, 130, 138, 155 für Turbinen eine Superlegierung auf einer Eisen-, Nickel- und/oder Kobaltbasis. Die äußere Schicht 7 ist vorzugsweise eine Korrosions- und/oder Oxidationsschicht auf der Basis einer Legierung MCrAlX (Fig. 15).
Sie kann aber auch keramisch sein.

Das Substrat 4 und die Schicht 7 weisen zumindest ein Filmkühlloch 28 auf, das auf der unter den betrieblichen Einsatzbedingungen heißen Seite 22 einen Diffusor 13 aufweist, der von der beispielsweise zylindrischen, quaderförmigen oder allgemein gesagt symmetrischen Kontur 49 des unteren Teils 24 des Filmkühllochs 28 nahe eines Kühlreservoir 31 abweicht und sich im Querschnitt vergrößert.

Das Filmkühlloch 28 besteht also aus einem unteren Teil 24 und dem äußeren Diffusor 13. Der Diffusor 13 hat eine Austrittsöffnung 58, die von einem Heißgas in Überströmrichtung 37 überströmt wird.
Der Diffusor 13 ist gebildet aus einer gedachten Fortsetzung 12 der Kontur 49 bis zur Oberfläche 25 und einem Zusatz 14 (Fig. 2), der sich an einer oder mehreren Seitenflächen der Fortsetzung 12 anschließt.
In der Querschnittsansicht der Figur 1 hat der Zusatz 14 vorzugsweise eine Keilform.
In der Ebene der äußeren Oberfläche weist der Diffusor 13 also keine Drehsymmetrie auf, wobei der Schwerpunkt der asymmetrischen Form von dem Schwerpunkt der symmetrischen Form der Kontur 49 in Überstromrichtung 37 verschoben ist. Entlang der Senkrechten 27 zur äußeren Oberfläche 25 hin wird die Querschnittsfläche des Filmkühllochs 28, auf der die Senkrechte 27 senkrecht steht, größer, d.h. der Diffusor 13 ist ganz oder vorzugsweise teilweise trichterförmig ausgebildet.

Erfindungsgemäß ist der Diffusor 13 zum größten Teil innerhalb der einzigen Schicht 7 angeordnet, d.h., wenn der Diffusor 13 sich mit einer Gesamtlänge 19 in die Tiefe längs einer Senkrechten 27 des Bauteils 1, die senkrecht auf der äußeren Oberfläche 25 oder senkrecht zur Überströmrichtung 37 steht, erstreckt, so ergibt sich eine Substratlänge 16 des Diffusors 13, die den Anteil des Diffusors 13 im Substrat 4 darstellt. Die Substratlänge 16 ist deutlich kleiner ausgebildet als die Gesamtlänge 19. Die gesamte Beschichtungsdicke 26 (hier die der Schicht 7) bildet den restlichen Teil der Gesamtlänge 19 des Diffusors 13. Die Beschichtungsdicke 26 beträgt mindestens 50%, vorzugsweise mindestens 60% oder mindestens 70%, insbesondere 80% oder 90% der Gesamtlänge 19.

Alternativ kann der Diffusor 13 vollständig in der einzigen Schicht 7 angeordnet sein (Fig. 3, Schichtdicke 26 = Gesamtlänge 19).

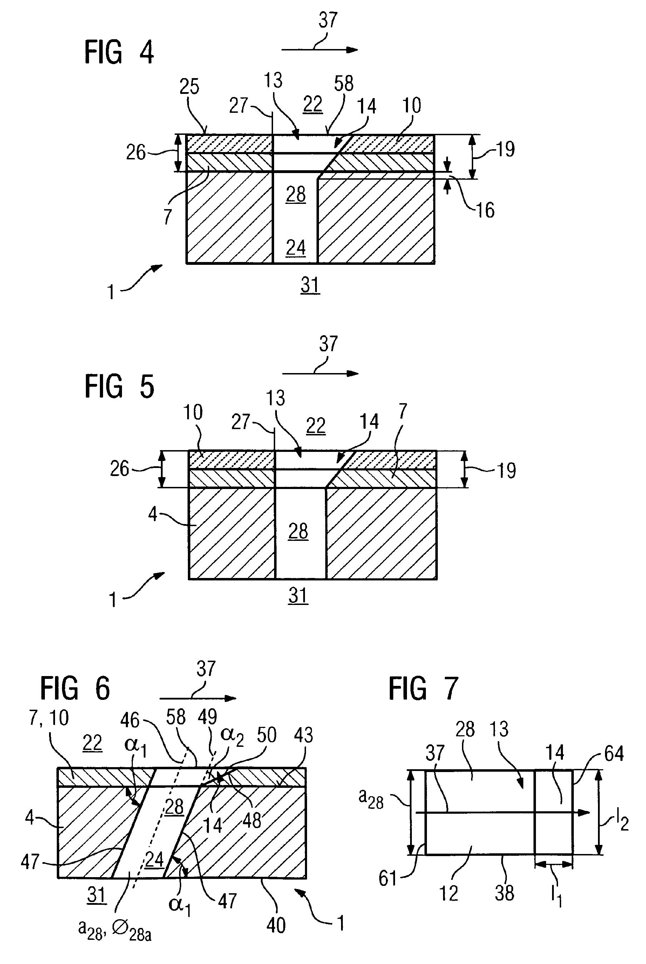

In der Figur 4 sind zwei Schichten auf dem Substrat 4 vorhanden.
Dies ist wiederum eine Korrosions- und Oxidationsschutzschicht 7, auf der noch eine äußere keramische Wärmedämmschicht 10 aufgebracht ist.
Ebenso wie in Figur 1 gibt es die Längen 16, 19 des Diffusors 13, wobei die Schichtdicke 26 wiederum mindestens 50%, 60% oder insbesondere 70%, insbesondere 80% oder 90% der Gesamtlänge 19 ausmacht.
Ebenso kann der Diffusor 13 vollständig in den zwei Schichten 7, 10 angeordnet sein (Fig. 5).
Entsprechend den zwei Schichten gemäß Figur 4, 5 gilt dies auch für drei oder mehr Schichten.

Dadurch dass der Diffusor 13 größtenteils oder ganz in den Schichten 7, 10 angeordnet ist, ergeben sich Vorteile beim Wiederaufarbeiten des Bauteils 1 beispielsweise hinsichtlich eines Laserabtragens oder eines Entfernens von Material oberhalb des unteren Teils 24, das nach dem Neubeschichten des Bauteils 1 die Austrittsöffnung 58 verdeckt, nämlich dadurch, dass der Laser oder sonstige Bearbeitungsapparaturen nur auf das Material der Schichten 7, 10 eingestellt werden muss und die Bearbeitung des anderen Materials, nämlich das des Substrats 4, nicht beachtet werden muss.

Figur 6 zeigt einen Querschnitt durch ein Bauteil 1 mit einem Filmkühlloch 28.
Das Substrat 4 weist eine äußere Oberfläche 43 auf, auf der die zumindest eine Schicht 7, 10 aufgebracht ist.
Der Diffusor 13 ist beispielsweise größtenteils (gem. Fig. 1, 3, 4, 5) in der Schicht 7, 10 angeordnet, kann aber auch ganz im Substrat 4 oder größtenteils im Substrat 4 vorhanden sein.

Der untere Teil 24 des Filmkühllochs 28 weist im Längsschnitt beispielsweise eine Symmetrielinie 46 auf.

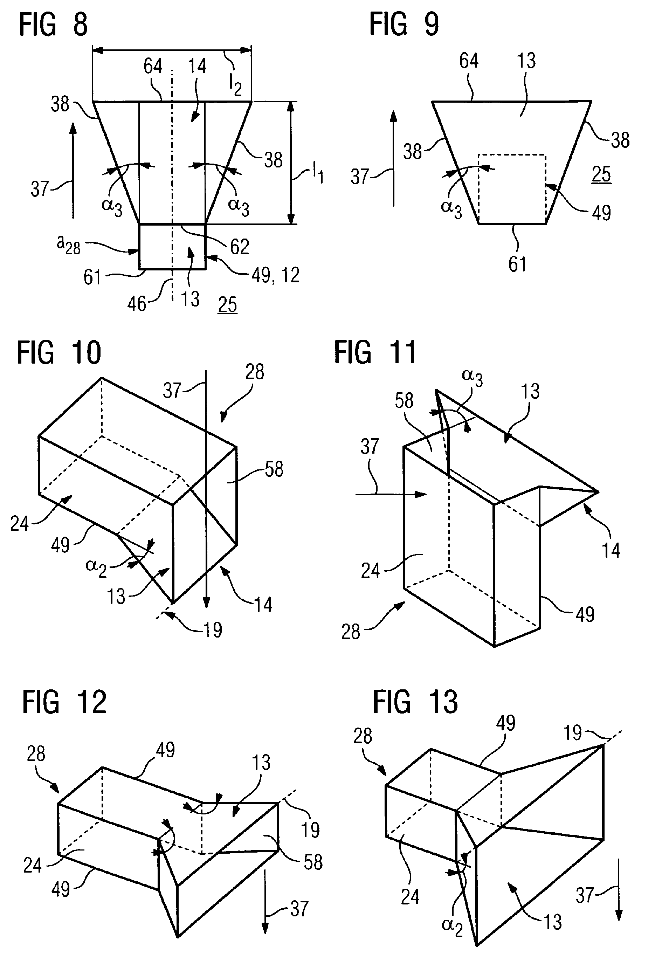

Die Symmetrielinie 46 stellt beispielsweise auch eine Ausströmrichtung 46 für ein Kühlmedium dar, das das Filmkühlloch 28 durchströmt.
Eine Konturlinie 47, die parallel zur Symmetrielinie 46 auf der Innenseite des Filmkühllochs 28 verläuft oder eine Projektion der Symmetrielinie 46 auf die Innenseite des unteren Teils 24 des Filmkühllochs 28 darstellt, bildet einen spitzen Winkel α1 mit der äußeren Oberfläche 43, der insbesondere bei 30° +/- 10% liegt. Das Filmkühlloch 28 ist also in Überströmrichtung 37 geneigt.
Die Kantenlänge a₂₈ (Fig. 8) bzw. der Durchmesser φ₂₈ des Filmkühllochs 28 beträgt beispielsweise etwa 0,62mm bzw. 0,7mm bei Laufschaufeln und etwa 0,71mm bzw. 0,8mm bei Leitschaufeln.

Die Konturlinie 47, die entlang der Kontur 49 des unteren Teils 24 vorzugsweise parallel zur Ausströmrichtung 46 verläuft, weist einen spitzen Winkel α2 mit einer Diffusorlinie 48 auf, die auf der Innenfläche 50 des Zusatzes 14 des Diffusors 13 verläuft und die eine Projektion der Überströmrichtung 37 auf die Innenfläche 50 des Zusatzes 14 des Diffusors 13 darstellt.
Der Winkel α2 beträgt insbesondere 10° +/- 10%.
Der untere Teil 24 entlang der Symmetrielinie 46 weist einen konstanten Querschnitt auf, der insbesondere eine n-zahlige Drehsymmetrie (quadratisch, rechteckig, rund, oval,...) aufweist.

Der Diffusor 13 entsteht dadurch, dass sich die Querschnittsfläche des Filmkühllochs 28 verbreitert, also im Längsschnitt trichterförmig ausgebildet ist. Der Zusatz 14 zu der Kontur 49 erstreckt sich nicht notwendigerweise vollständig um die Austrittsöffnung 58 des Filmkühllochs 28 herum, sondern nur teilweise, insbesondere um die Hälfte oder weniger des Umfangs der Austrittsöffnung 58.
Vorzugsweise ist der Diffusor 13 nur - in Überströmrichtung 37 des Heißgases 22 gesehen - im hinteren Bereich der Öffnung 58 angeordnet (Fig. 7). Seitenlinien 38 des Diffusors 13 oder der Zusatz 14 verlaufen in der Draufsicht beispielsweise parallel zur Überströmrichtung 37 (Fig. 7).

Die gesamte Schichtdicke der zumindest einen Schicht 7, 10 beträgt etwa 400µm bis 700µm, insbesondere 600µm.

Figur 8 zeigt eine weitere Ausgestaltung des Filmkühllochs 28 und eine Draufsicht auf den Diffusor 13 in der Ebene der äußeren Oberfläche 25 des Schichtsystems bzw. Bauteils 1. Der Zusatz 14 weist in der Ebene der äußeren Oberfläche 25 beispielsweise eine Trapezform auf.
In der Ebene der Oberfläche 25 weist der Zusatz 14 des Diffusors 13 in Überströmrichtung 37 eine Längslänge 1₁ vorzugsweise von etwa 3mm auf.
Die größte Breite, d. h. die größte Querlänge 1₂ des Diffusors 13 in der Oberfläche, also senkrecht zur Überströmrichtung 37 gemessen, weist vorzugsweise eine Größe von 2 +- 0,2 mm bei Laufschaufeln und eine Größe von 4 +- 0,2 mm bei Leitschaufeln auf und beträgt höchstens 8mm.
Beim Ausführungsbeispiel der Figur 8 beginnt die Verbreiterung des Diffusors 13 an einer Verbreiterungsvorderkante 62, also beim Zusatz 14, und verbreitert sich in Überströmrichtung 37.
Die Überströmrichtung 37 bildet mit einer seitlichen Begrenzungslinie 38 des Zusatzes 14 in der Ebene der äußeren Oberfläche 25 einen spitzen Winkel α3, insbesondere 10° +/- 10%.

Vorzugsweise abweichend von der Kontur 49 des beispielsweise bezüglich zweier aufeinander senkrecht stehender Achsen symmetrischen unteren Teils 24 verbreitert sich der Diffusor 13 quer zur Überströmrichtung 37 jeweils um einen Winkel α3, der insbesondere 10° +/- 10% beträgt, wobei die Verbreiterung bereits an einer Vorderkante 61 (in Überströmrichtung 37 gesehen) des Filmkühllochs 28 beginnt und sich bis zur Hinterkante 64 erstreckt.
Daher hat der Diffusor 13 in der Ebene der Oberfläche 25 einen trapezförmigen Querschnitt (Fig. 9).

Der Diffusor 13 wird durch ein Materialabtragungsverfahren, beispielsweise Elektronenbestrahlung oder Laserbestrahlung erzeugt. Nur so lässt sich eine Vielzahl von Kühllöchern genau und in reproduzierbarer Weise erzeugen.

Die Figuren 10, 11, 12 und 13 zeigen verschiedene Konturen des Filmkühllochs 28.
Der untere Teil 24 des Filmkühllochs 28 ist hier nur beispielhaft quaderförmig ausgebildet, kann jedoch auch eine runde oder ovale Querschnittsform aufweisen.

In Figur 10 ist der Diffusor 13 beispielsweise nur in Überströmrichtung 37 verlängert, sodass der Querschnitt der Austrittsöffnung 58 größer ist als der Querschnitt des unteren Teils 24. Das Filmkühlloch 28 entspricht also dem Filmkühlloch gemäß Figur 2, 6 oder 7.

Ausgehend von Figur 10 ist in Figur 11 ein Filmkühlloch 28 dargestellt, das sich noch quer zur Überströmrichtung 37 in Überströmrichtung 37 verbreitet, also Figur 8 entspricht.

In Figur 12 ist der Diffusor 13 beispielsweise nur quer zur Überströmrichtung 37 verbreitert, sodass auch hier der Querschnitt der Austrittsöffnung 58 größer ist als der Querschnitt des unteren Teils 24.
Das Filmkühlloch 28 besteht beispielsweise aus einem quaderförmigen unteren Teil 24, an dem sich ein Diffusor 13 in Form eines Hexaeders mit parallelen, trapezförmigen Seitenflächen anschließt.

In Figur 13 ist der Diffusor 13 sowohl nur in Überströmrichtung 37 als auch in beiden Richtungen quer zur Überströmrichtung 37 verbreitert.

Den Figuren 6, 7, 8, 9, 10, 11 und 13 ist jeweils zu entnehmen, dass der Diffusor 13 in Überströmrichtung 37 gesehen größtenteils hinter der Austrittsöffnung 58 angeordnet ist. Dies bedeutet also, dass der Diffusor 13 durch eine unsymmetrische Verbreiterung in Überströmrichtung 37 gesehen ausgebildet ist. Eine gleichmäßige Verbreiterung des Querschnitts des unteren Teils 24 des Filmkühllochs 28 auf der Höhe der äußeren Oberfläche 25 ist nicht gewollt.
In Figur 6 ist deutlich zu erkennen und dazu beschrieben, dass der Zusatz 14 die Verbreiterung des Querschnitts in Überströmrichtung 37 darstellt, wodurch der Diffusor gebildet wird. Dies zeigt auch die Aufsicht gemäß Figur 7 zu Figur 6. In Figur 8 beginnt die Verbreiterung der Öffnung des Querschnitts des Filmkühllochs in Überströmrichtung 37 ab der Linie 62.
In Figur 9 beginnt die Verbreiterung des Diffusors 13 bereits an der Vorderkante 61 in Überströmrichtung 37 gesehen.
Eine Verbreiterung des Querschnitts des Filmkühllochs 28 auf der Höhe der äußeren Oberfläche 25 entgegen der Überströmrichtung 37, d. h. vor der Vorderkante 61 ist nicht vorhanden oder nur in geringem Umfang im Vergleich zu der Verbreiterung des Querschnitts in Überströmrichtung 37.

Figur 15 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem (einzigen) Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

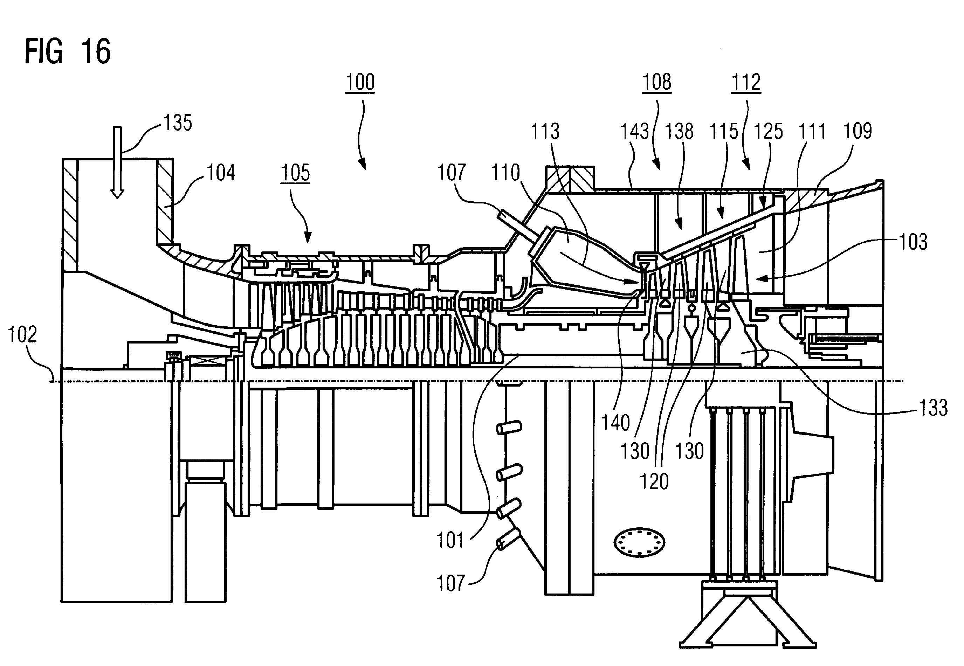

Die Figur 16 zeigt eine Brennkammer 110 einer Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Filmkühllöcher (nicht dargestellt) auf.

Die Figur 17 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die bzgl. der chemischen Zusammensetzung Teil dieser Offenbarung sein sollen.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Bauteil mit mindestens einem Filmkühlloch (28),
wobei das Bauteil (1) besteht aus
einem Substrat (4) und
zumindest einer Schicht (7, 10),
wobei das Filmkühlloch (28) im äußeren Bereich einen Diffusor (13) aufweist,
wobei ein Heißgas das Filmkühlloch (28) in Überströmrichtung (37) überströmt,
wobei das Filmkühlloch (28) einen unteren Teil (24) aufweist,
wobei der Diffusor (13) als Teil des Filmkühllochs (28) sich an den unteren Teil (24) anschließt und
**dadurch gekennzeichnet,**
**dass** der gesamte Diffusor (13) größtenteils in der zumindest einen Schicht (7, 10) angeordnet ist,
**dass** die gesamte Beschichtungsdicke (26) mindestens 60% der entlang einer Senkrechten (27) zur äußeren Oberfläche (25) der mindestens einen Schicht (7, 10) gemessenen Gesamtlänge (19) des Diffusors (13) beträgt,
**dass** der Diffusor (13) sich in der Ebene der äußeren Oberfläche (25) der Schicht (7, 10) in Überströmrichtung (37) um einen spitzen Winkel (α3) zur Überströmrichtung (37) quer zur Überströmrichtung (37) verbreitert,
**dass** die Austrittöffnung (58) des Filmkühllochs (28) in Überströmrichtung (37) eine Vorderkante (61) und eine Hinterkante (64) aufweist und
**dass** sich der Diffusor (13) in der Ebene der Austrittsöffnung von der Vorderkante (61) ausgehend verbreitert,
sodass der Diffusor (13) in der Ebene der äußeren Oberfläche (25) trapezförmig ausgebildet ist.

2. Bauteil nach Anspruch 1,
**dadurch gekennzeichnet, dass**
die Beschichtungsdicke (26) mindestens 80% der Gesamtlänge (19) des Diffusors (13) beträgt.

3. Bauteil nach Anspruch 1,
**dadurch gekennzeichnet, dass**
die Beschichtungsdicke (26) gleich der Gesamtlänge (19) des Diffusors (13) ist.

4. Bauteil nach Anspruch 1, 2 oder 3,
**dadurch gekennzeichnet,**
**dass** das Substrat (4) eine äußere Oberfläche (43) aufweist, und dass das Filmkühlloch (28) unter einem von 0° verschiedenen spitzen Winkel (α1) zur äußeren Oberfläche (43) in der mindestens einen Schicht (7, 10) verläuft.

5. Bauteil nach einem oder mehreren der vorherigen Ansprüche,
**dadurch gekennzeichnet,**
**dass** ein Heißgas das Filmkühlloch (28) in Überströmrichtung (37) überströmt,
**dass** ein Medium das Filmkühlloch (28) in Ausströmrichtung (46) durchströmt,
**dass** das Filmkühlloch (28) einen unteren Teil (24) aufweist,
**dass** der Diffusor (13) als Teil des Filmkühllochs (28) sich an den unteren Teil (24) anschließt
und in Ausströmrichtung (46) einen sich senkrecht zur Ausströmrichtung (46) verbreiternden Querschnitt aufweist, wobei der Querschnitt des Diffusors (13) sich verbreitert.

6. Bauteil nach einem oder mehreren der vorherigen Ansprüche,
**dadurch gekennzeichnet,**
**dass** ein Heißgas das Filmkühlloch (28) in Überströmrichtung (37) überströmt,
**dass** ein Medium das Filmkühlloch (28) in Ausströmrichtung (46) durchströmt,
**dass** das Filmkühlloch (28) einen unteren Teil (24) aufweist, dass der Diffusor (13) als Teil des Filmkühllochs (28) sich an den unteren Teil (24) anschließt,
**dass** eine Konturlinie (47) entlang der Kontur (49) des unteren Teils (24) parallel zur Ausströmrichtung (46) verläuft, dass eine Diffusorlinie (48) auf der Innenseite des Diffusors (13) verläuft,
die (48) eine Projektion der Überströmrichtung (37) auf die Innenfläche eines Zusatzes (14) des Diffusors (13) ist,
und **dass** die Diffusorlinie (48) einen spitzen Winkel (α2) mit der Konturlinie (47) aufweist.

7. Bauteil nach Anspruch 1,
**dadurch gekennzeichnet,**
**dass** der Diffusor (13) aus einer Fortsetzung der Kontur (49) des unteren Teils (24) und einem Zusatz (14) besteht und
**dass** nur der Zusatz (14) des Diffusors (13) sich so zur äußeren Oberfläche (25) hin verbreitert,
**dass** er (14) in der Ebene der äußeren Oberfläche (25) trapezförmig ist.

8. Bauteil nach Anspruch 1 oder 5,
**dadurch gekennzeichnet,**
**dass** der Diffusor (13) in der Ebene der äußeren Oberfläche (25) in Überströmrichtung (37) eine Längslänge (1₁) aufweist und
**dass** die breiteste Querlänge (1₂) senkrecht zur Längslänge (1₁) höchstens 10mm beträgt.

9. Bauteil nach Anspruch 1, 2 oder 3,
**dadurch gekennzeichnet, dass**
eine äußere Schicht (10) auf einer zwischenliegenden Schicht (7) aufgebracht ist.

10. Bauteil nach Anspruch 8,
**dadurch gekennzeichnet,**
**dass** die zwischen liegende Schicht (7) aus der Legierung des Typs MCrAlX besteht und
**dass** die äußere Schicht (10) insbesondere eine keramische Wärmedämmschicht darstellt.

11. Bauteil nach Anspruch 1, 8 oder 9,
**dadurch gekennzeichnet, dass**
das Bauteil (1) ein Bauteil einer Dampf- oder Gasturbine (100),
insbesondere eine Turbinenschaufel (120, 130),
ein Hitzeschildelement (155) ist.

## Claims

1. Component having at least one film cooling hole (28), the component (1) consisting of a substrate (4) and at least one layer (7, 10), the film cooling hole (28) comprising a diffuser (13) in the outer region,
wherein a hot gas flows over the film cooling hole (28) in an overflow direction (37),
wherein the film cooling hole (28) comprises a lower part (24),
wherein the diffuser (13) adjoins the lower part (24) as part of the film cooling hole (28) and
**characterized**
**in that** the entire diffuser (13) is for the most part arranged in the at least one layer (7, 10),
**in that** the overall coating thickness (26) is at least 60% of the overall length (19) of the diffuser (13) as measured along a normal (27) to the outer surface (25) of the at least one layer (7, 10),
**in that** the diffuser (13) widens in the plane of the outer surface (25) of the layer (7, 10) in the overflow direction (37) at an acute angle (α3) to the overflow direction (37) transversely to the overflow direction (37),
**in that** the outlet opening (58) of the film cooling hole (28) comprises a leading edge (61) and a trailing edge (64) in the overflow direction (37) and
**in that** the diffuser (13) widens in the plane of the outlet opening starting from the leading edge (61), so that the diffuser (13) is shaped trapezoidally in the plane of the outer surface (25).

2. Component according to Claim 1, **characterized in that** the coating thickness (26) is at least 80% of the overall length (19) of the diffuser (13).

3. Component according to Claim 1, **characterized in that** the coating thickness (26) is equal to the overall length (19) of the diffuser (13).

4. Component according to Claim 1, 2 or 3, **characterized in that** the substrate (4) comprises an outer surface (43),
and **in that** the film cooling hole (28) extends at a non-0° acute angle (α1) to the outer surface (43) in the at least one layer (7, 10).

5. Component according to one or more of the preceding claims, **characterized**
**in that** a hot gas flows over the film cooling hole (28) in an overflow direction (37),
**in that** a medium flows through the film cooling hole (28) in an outflow direction (46),
**in that** the film cooling hole (28) comprises a lower part (24), in that the diffuser (13) adjoins the lower part (24) as part of the film cooling hole (28) and in the outflow direction (46) has a cross section widening perpendicular to the outflow direction (46),
with the cross section of the diffuser (13) widening.

6. Component according to one or more of the preceding claims, **characterized**
**in that** a hot gas flows over the film cooling hole (28) in an overflow direction (37),
**in that** a medium flows through the film cooling hole (28) in an outflow direction (46),
**in that** the film cooling hole (28) comprises a lower part (24), in that the diffuser (13) adjoins the lower part (24) as part of the film cooling hole (28),
**in that** a contour line (47) along the contour (49) of the lower part (24) extends parallel to the outflow direction (46),
**in that** a diffuser line (48) extends on the inner side of the diffuser (13), which (48) is a projection of the overflow direction (37) onto the inner face of an appendage (14) of the diffuser (13),
and **in that** the diffuser line (48) makes an acute angle (α2) with the contour line (47).

7. Component according to Claim 1, **characterized in that** the diffuser (13) consists of a continuation of the contour (49) of the lower part (24) and an appendage (14) and **in that** only the appendage (14) of the diffuser (13) widens toward the outer surface (25) so that it (14) is shaped trapezoidally in the plane of the outer surface (25).

8. Component according to Claim 1 or 5, **characterized in that** the diffuser (13) has a longitudinal length (1₁) in the plane of the outer surface (25) in the overflow direction (37), and
**in that** the broadest transverse length (1₂) perpendicularly to the longitudinal length (1₁) is at most 10 mm.

9. Component according to Claim 1, 2 or 3, **characterized in that** an outer layer (10) is applied on an intermediately lying layer (7).

10. Component according to Claim 8, **characterized in that** the intermediately lying layer (7) consists of an alloy of the MCrAlX type and
**in that** the outer layer (10) constitutes in particular a ceramic thermal insulation layer.

11. Component according to Claim 1, 8 or 9, **characterized in that** the component (1) is a component of a steam turbine or gas turbine (100), in particular a turbine blade (120, 130), a heat shield element (155).

## Revendications

1. Elément comportant au moins un trou ( 28 ) de refroidissement par film,
dans lequel l'élément ( 1 ) est constitué d'un substrat ( 4 ) et
d'au moins une couche ( 7, 10 ),
le trou ( 28 ) de refroidissement par film ayant un diffuseur ( 13 ) dans la partie extérieure,
dans lequel un gaz chaud déborde du trou ( 28 ) de refroidissement par film dans un sens ( 37 ) de débordement, dans lequel le trou ( 28 ) de refroidissement par film a une partie ( 24 ) inférieure,
le diffuseur ( 13 ) se raccordant en tant que partie du trou ( 28 ) de refroidissement par film à la partie ( 24 ) inférieure et
**caractérisé**
**en ce que** tout le diffuseur ( 13 ) est disposé pour la plus grande partie dans la au moins une couche ( 7, 10 ),
**en ce que** toute l'épaisseur ( 26 ) de revêtement représente au moins 60% de toute la longueur ( 19 ) du diffuseur ( 13 ) mesuré le long d'une perpendiculaire ( 27 ) à la surface ( 25 ) extérieure de la au moins une couche ( 7, 10 ),
**en ce que** le diffuseur ( 13 ) s'élargit transversalement au sens ( 37 ) de débordement dans le plan de la surface de la surface ( 25 ) extérieure de la couche ( 7, 10 ) dans le sens ( 37 ) de débordement en faisant un angle ( α3 ) aigu avec le sens ( 37 ) de débordement,
**en ce que** l'ouverture ( 58 ) de sortie du trou ( 28 ) de refroidissement par film a dans le sens ( 37 ) de débordement un bord ( 61 ) avant et un bord ( 64 ) arrière et
**en ce que** le diffuseur ( 13 ) s'élargit dans le plan de l'ouverture de sortie en partant du bord ( 61 ) avant, de sorte que le diffuseur ( 13 ) est constitué sous la forme d'un trapèze dans le plan de la surface ( 25 ) extérieure.

2. Elément suivant la revendication 1,
**caractérisé en ce que**
l'épaisseur ( 26 ) du revêtement représente au moins 80% de toute la longueur ( 19 ) du diffuseur ( 13 ).

3. Elément suivant la revendication 1,
**caractérisé en ce que**
l'épaisseur ( 26 ) du revêtement est égale à toute la longueur ( 19 ) du diffuseur ( 13 ).

4. Elément suivant la revendication 1, 2 ou 3,
**caractérisé**
**en que** le substrat ( 4 ) a une surface ( 43 ) extérieure et en ce que le trou ( 28 ) de refroidissement par film s'étend dans la au moins une couche ( 7, 10 ) en faisant un angle ( α1 ) aigu différent de 0° avec la surface ( 43 ) extérieure.

5. Elément suivant l'une ou plusieurs des revendications précédentes,
**caractérisé**
**en ce qu'**un gaz chaud déborde du trou ( 28 ) de refroidissement par film dans un sens ( 37 ) de débordement, en ce qu'un milieu passe dans le trou ( 28 ) de refroidissement par film dans le sens ( 48 ) de sortie,
**en ce que** le trou ( 28 ) de refroidissement par film a une partie ( 24 ) inférieure,
**en ce que** le diffuseur ( 13 ) se raccorde en tant que partie du trou ( 28 ) de refroidissement par film à la partie ( 24 ) inférieure,
et a dans le sens ( 46 ) de sortie une section transversale s'élargissant perpendiculairement au sens ( 46 ) de sortie, la section transversale du diffuseur ( 13 ) s'élargissant.

6. Elément suivant l'une ou plusieurs des revendications précédentes,
**caractérisé**
**en ce qu'**un gaz chaud déborde du trou ( 28 ) de refroidissement par film dans un sens ( 37 ) de débordement, en ce qu'un milieu passe dans le trou ( 28 ) de refroidissement par film dans le sens ( 48 ) de sortie,
**en ce que** le trou ( 28 ) de refroidissement par film a une partie ( 24 ) inférieure,
**en ce que** le diffuseur ( 13 ) se raccorde en tant que partie du trou ( 28 ) de refroidissement par film à la partie ( 24 ) inférieure,
**en ce qu'**une ligne ( 47 ) de contour s'étend parallèlement au sens ( 46 ) de sortie le long du contour ( 49 ) de la partie ( 24 ) inférieure,
**en ce qu'**une ligne ( 48 ) de diffuseur s'étend sur le côté intérieur du diffuseur ( 13 ),
qui ( 48 ) est une projection du sens ( 37 ) de débordement sur la surface intérieure d'une adjonction ( 14 ) du diffuseur ( 13 ),
et **en ce que** la ligne ( 48 ) de diffuseur fait un angle ( α2 ) aigu avec la ligne ( 47 ) de contour.

7. Elément suivant la revendication 1,
**caractérisé**
**en ce que** le diffuseur ( 13 ) est constitué d'un prolongement du contour ( 49 ) de la partie ( 24 ) inférieure et d'une adjonction ( 14 ), et
**en ce que** seulement l'adjonction ( 14 ) du diffuseur ( 13 ) s'élargit vers la surface ( 25 ) extérieure,
de manière à ce qu'elle ( 14 ) soit en forme de trapèze dans le plan de la surface ( 25 ) extérieure.

8. Elément suivant la revendication 1 ou 5,
**caractérisé**
**en ce que** le diffuseur ( 13 ) a une longueur ( 1₁ ) longitudinale dans le plan de la surface ( 25 ) extérieure dans le sens ( 37 ) de débordement et
**en ce que** la longueur ( l₂ ) transversale la plus large perpendiculairement à la longueur ( l₁ ) longitudinale est au plus de 10mm.

9. Elément suivant la revendication 1, 2 ou 3,
**caractérisé en ce que**
une couche ( 10 ) extérieure est déposée sur la couche ( 7 ) intermédiaire.

10. Elément suivant la revendication 8,
**caractérisé**
**en ce que** la couche ( 7 ) intermédiaire est en alliage du type MCrAlX et
**en ce que** la couche ( 10 ) extérieure constitue notamment une couche calorifuge en céramique.

11. Elément suivant la revendication 1, 8 ou 9,
**caractérisé en ce que**
l'élément ( 1 ) est un élément d'une turbine ( 100 ) à vapeur ou à gaz,
notamment une aube ( 120, 130 ) de turbine,
un élément ( 155 ) de bouclier thermique.
